Europäisches Patentamt

European Patent Office

Office européen des brevets

(11) Publication number: 0 297 706
A2

# EUROPEAN PATENT APPLICATION

(21) Application number: 88304223.6

(22) Date of filing: 10.05.88

(51) Int. Cl.⁴: **C08F 285/00 , C08F 120/14**

(30) Priority: 29.06.87 GB 8715193

(43) Date of publication of application:
04.01.89 Bulletin 89/01

(84) Designated Contracting States:
AT BE CH DE ES FR GB IT LI NL SE

(71) Applicant: IMPERIAL CHEMICAL INDUSTRIES PLC
Imperial Chemical House Millbank
London SW1P 3JF(GB)

(72) Inventor: Brown, David Thomas
15 Ambleside Drive
Darwen Lancashire BB3 3BG(GB)
Inventor: Wood, Richard
80 Durham Road Wilpshire
Blackburn Lancashire BB1 9NH(GB)

(74) Representative: Downer, John Michael et al
Imperial Chemical Industries PLC Legal
Department: Patents PO Box 6 Bessemer
Road
Welwyn Garden City Herts, AL7 1HD(GB)

(54) Impact resistant acrylic sheet.

(57) A cast acrylic sheet of RV at least 1.0 dl/g containing at least 0.25% but less than 4% by weight of the cast sheet of a multi-stage, emulsion polymerised, acrylic additive comprising at least two stages wherein the final stage is a polymer of glass transition temperature (Tg) of at least 25°C formed from monomers containing at least 50% by weight of methyl methacrylate which final stage is formed by polymerising the final stage in an emulsion polymerisation process in the presence of a preformed polymer which contains at least one rubbery stage having a Tg less than 25°C prepared by polymerising at least 50% by weight of a $C_1$ to $C_8$ alkyl acrylate, and at least 0.05% by weight of a cross-linking agent or graft linking agent.

EP 0 297 706 A2

# IMPACT RESISTANT ACRYLIC SHEET

This invention relates to an impact resistant acrylic sheet and to a process of manufacturing such sheet.

Acrylic sheet produced from methyl methacrylate monomer, and optionally minor amounts of copolymerisable comonomers has been available for many years. The product has been used in a large number of applications which take advantage of the excellent properties of this polymer. These applications include those which take advantage of the excellent clarity of the polymer, and those in which pigments and fillers are present giving coloured or white products of excellent surface finish and aesthetic appeal. Although the inherent impact strength of the material is reasonably good there are applications in which an improved impact strength would be highly desirable provided that the remaining physical, mechanical and aesthetic properties are not adversely affected to a significant extent.

A cast acrylic sheet has now been developed in which a substantial improvement in impact strength has been achieved whilst substantially maintaining the other desirable properties of the sheet.

The toughness of rigid plastics, such as polymethyl methacrylate has been the subject of extensive studies for many years. Many successful compositions have been achieved on the basis that the inclusion of rubbery particles in a rigid polymer matrix will absorb the energy imparted to an article formed from the composition, as a result of an impact. Several theories exist as to the mechanism of the protection against impact but it is generally accepted that in the case of rigid compositions toughened by the presence of rubbery materials the additive must be present as a discrete phase and large enough to exhibit rubbery properties. The rubbers will be ineffective if molecularly dispersed in the matrix and should generally have a size of at least 0.01 microns. Generally in acrylic systems the size of the dispersed particles should be less than 1 micron. The other requirement is that there should be sufficient compatibility between the rigid and rubber phases to ensure good adhesion between the phases. Based on these principles very effective rubbery additives have been developed for use in acrylic moulding powders. These additives are generally blended into the moulding powder by compounding the additive and the matrix polymer in a screw extruder. Suitable rubbery acrylic additives for imparting impact resistance to rigid acrylic polymers are described inter alia in British Patent Specification No. 1 414 187 which discloses blends of 4 to 90% by weight of a multi-stage graft copolymer consisting of a first stage of a polymer having a glass transition temperature of greater than $25^\circ$C based on methyl methacrylate, an intermediate rubbery stage having a glass transition temperature of less than $25^\circ$C based on alkyl acrylates and a final stage of glass transition temperature greater than $25^\circ$C based on methyl methacrylate and correspondingly 96% to 10% by weight of a rigid polymer such as polymers of methyl methacrylate. Whereas the patent specification suggests that such compositions can be moulded, extruded or cast into articles such as sheets, it has been found that such compositions although eminently satisfactory in moulding applications do not give the level of properties and appearance required of conventional cast sheet.

According to the invention there is provided a cast acrylic sheet polymerised from monomers comprising at least 80%, preferably at least 98% by weight of methyl methacrylate, and intimately blended therein at least 0.25% but less than 4% by weight, preferably 0.5 to 3.9% by weight of the cast sheet of a multi-stage, emulsion polymerised, acrylic additive comprising at least two stages wherein the final stage is a polymer of glass transition temperature (Tg) of at least $25^\circ$C formed from monomers containing at least 50% and preferably at least 80% by weight of methyl methacrylate which final stage is formed by polymerising the final stage in an emulsion polymerisation process in the presence of a preformed polymer which contains at least one rubbery stage having a Tg of less than $25^\circ$C prepared by polymerising in emulsion at least 50% by weight and preferably at least 80% by weight of a $C_1$ to $C_8$ alkyl acrylate, and at least 0.05% by weight of cross-linking agents selected from (a) 0 to 5% by weight of a polyethylenically unsaturated cross-linking agent in which the polymerisable ethylenically unsaturated groups are of equal reactivity and (b) 0 to 5% by weight of a polyethylenically unsaturated cross-linking agent in which the polymerisable ethylenically unsaturated groups are not all of equal reactivity and wherein the reduced viscosity of the matrix polymer of the sheet, excluding the multi-stage additive, is at least 1.0 dl/g and preferably at least 1.5 dl/g measured as a 1% solution in chloroform for an essentially un-cross-linked matrix polymer or has a back-bone molecular weight of at least 1.0 dl/g if polymerised in the presence of cross-linking agents.

Surprisingly, the sheet of the invention not only has a significantly enhanced impact strength compared with a comparable normal acrylic sheet of reduced viscosity of at least 1.0 dl/g not containing the multi-stage polymer, but the attractive properties of such normal sheet are not significantly diminished. The actual level of impact strength achieved in the cast sheet from such a low level of additive is in itself surprising in view of the high levels of impact modifier considered necessary and normally used (at least 20% by weight) in other polymer compositions produced by compounding processes.

Accordingly there is also provided a method of producing an acrylic sheet of enhanced impact strength comprising polymerising in a cast polymerisation process a monomer charge comprising at least 80% by weight and preferably at least 98% by weight of the monomer charge of methyl methacrylate to form a matrix polymer in the presence of an intimately dispersed multi-stage acrylic impact additive comprising at least two stages wherein the final stage is a polymer of glass transition temperature of at least 25°C formed from monomers containing at least 50% and preferably at least 80% by weight of methyl methacrylate which final stage has been formed by polymerising the final stage in an emulsion polymerisation process in the presence of a preformed polymer which contains at least one rubbery stage of Tg less than 25°C prepared by the emulsion polymerisation of at least 50% by weight and preferably at least 80% by weight of a $C_1$ to $C_8$ alkyl acrylate, and at least 0.05% by weight of cross-linking agents selected from (a) 0 to 5% by weight of a polyethylenically unsaturated cross-linking agent in which the polymerisable ethylenically unsaturated groups are of equal reactivity and (b) 0 to 5% by weight of a polyethylenically unsaturated cross-linking agent in which the polymerisable ethylenically unsaturated groups are not all of equal reactivity, the matrix polymer being formed under conditions such that the reduced viscosity of the matrix polymer, excluding the multi-stage additive, is at least 1.0 dl/g measured as a 0.1% solution in chloroform for an essentially un-cross-linked matrix polymer or has a back-bone molecular weight of at least 1.0 dl/g if polymerised in the presence of cross-linking agents.

The casting process of the invention will be one of the conventional processes of polymerising such as in a cell formed from a pair of plates, for example glass plates, gasketed at their edges. The known process of casting between a pair of moving bands to produce a continuous sheet may also be used.

The multi-stage impact additive having the essential rubbery and final rigid stages will normally be produced by sequential polymerisation processes by known techniques. The specific number of stages and composition of the stages can be varied to optimise the properties obtained. The details of various suitable compositions are available for earlier patents. For example, British Patent Specification 1 340 025, 1 414 187 and United States Patent Specification 4 180 529 describe respectively 2, 3 and 4-stage products each having a final stage of a polymer of methyl methacrylate of Tg of at least 25°C.

It is preferred that each phase of the multi-stage polymer is linked to its surrounding phase by chemical links. This is best achieved by the inclusion in each of the stages, except the final stage, of a polyethylenically unsaturated cross-linking agent having polymerisable ethylenically unsaturated groups of different reactivity. These polymerise in the presence of the monoethylenically unsaturated monomers to give a certain amount of cross-linking of that particular phase but also contain some of the less reactive groups which are available for grafting to the monomers used in the succeeding phase. Cross-linking agents in which the polymerisable groups have equal reactivity may be included with those having different reactivity.

The most suitable multi-stage polymers for use in the present invention are those in which the rigid phase or phases having Tg's above 25°C are polymerised predominantly from methyl methacrylate, with not more than 20% by weight of additional monomers, which when present, are selected from $C_1$ to $C_8$ alkyl acrylates, styrene and acrylonitrile. As indicated, all stages of this type of stage, except the final stage, should preferably include up to 5% by weight of the phase, preferably 0.05 to 2.5%, of a cross-linking monomer with polymerisable groups of unequal reactivity. Cross-linking agents having polymerisable groups of equal reactivity may also be included.

The elastomeric stage or stages of the multi-stage product of Tg less than 25°C are most suitably prepared from $C_1$ to $C_8$ alkyl acrylates with up to 50% of copolymerisable monomers, which, in addition to up to 5% by weight of either or both of a cross-linking agent having polymerisable groups of equal reactivity and a cross-linking agent having polymerisable groups of different reactivity, may include monomers preferably selected from methyl methacrylate, styrene and substituted styrenes. The preferred alkyl acrylates for use in the invention are ethyl acrylate, n-butyl acrylate, iso butyl acrylate and 2-ethyl hexyl acrylate.

The cross-linking monomers having polymerisable groups of equal reactivity include ethylene glycol dimethacrylate, 1,3-butylene glycol dimethacrylate, 1,4-butylene glycol dimethacrylate, propylene glycol dimethacrylate, polyethylene dimethacrylate divinyl benzene, trivinyl benzene, ethylene glycol diacrylate, 1,3-butylene glycol diacrylate and triallyl cyanurate.

The cross-linking monomers having polymerisable groups of different reactivity include allyl acrylate, allyl methacrylate, diallyl maleate, diallyl fumarate crotyl methacrylate and acrylate.

The various stages of the multi-stage product should be polymerised by known emulsion polymerisation techniques in the presence of an emulsifier and an initiator. In particular, each stage should be polymerised so that the monomers are substantially completely polymerised before the addition of the monomers for a

3

subsequent phase. The concentrations of emulsifying agents present should be such that the number of particles generated in the first of the stages remains substantially constant in the subsequent stages and that no new particles are generated. In this manner it is possible to keep control of the average particle size of multi-stage polymer to ensure that the particles are of optimum size for conferring impact resistance. The preferred range for the average particle size of multi-stage polymer is in the range 0.05 to 0.5 microns, desirably 0.15 to 0.35 microns.

Other additives may be present during the polymerisation of the multi-stage product such as molecular weight regulators although it is generally preferable to use a multi-stage product in which the molecular weight of the rigid stages has been maximised.

The multi-stage product may be isolated from the polymerised emulsion by the usual techniques of coagulation, freeze drying or spray drying. The preferred form of the product for use in the casting process is a finely divided product. It is advisable to disperse the multi-stage powders in the methyl methacrylate monomer with the aid of a mixer regardless of the method of isolation of the powder from the polymerised emulsion.

The multi-stage product may also be admixed with further acrylic polymer prior to use in the casting process. The further acrylic polymer should be of a similar nature to the composition of the final stage of the polymerisation of the multi-stage product, or at least be compatible with the final stage material. The molecular weight of any additional acrylic polymer must be low enough to enable the multi-stage product to be melt compounded into the additional polymer and will generally have a reduced viscosity (as a 1% solution in chloroform) of less than 1.0 dl/g.

The invention is further described by reference to the following examples.

## EXAMPLE 1

Two litres of demineralised water were stirred continuously in a round bottom flask fitted with a condenser, nitrogen inlet, thermometer and dropping funnel.

The water was heated to 80°C and held at that temperature during the whole reaction. A constant blanket of nitrogen was maintained.

Three solutions were made up as detailed below.

|  | Solution (1) | Solution (2) | Solution (3) |
|---|---|---|---|
| Butyl Acrylate | 38.0g | 775.6g |  |
| Styrene | 8.6g | 175.7g |  |
| Allyl Methacrylate | 0.95g | 19.4g |  |
| Sodium dioctyl sulphosuccinate - -(60% solution in ethanol) | 0.5g | 10.8g |  |
| Methyl methacrylate |  |  | 171.1 |
| Ethyl acrylate |  |  | 9.0 |

Solution (1) was added to the vessel and 50 mls of a 1% by weight solution of potassium persulphate was added over a period of 55 minutes from a dropping funnel.

Solution (2) was then added to the reaction vessel, via the dropping funnel, over a period of an hour with a further 100 mls of potassium persulphate solution being added to maintain the reaction. Solution (3) was finally added over 20 minutes and the temperature was maintained at 80°C until the reaction was complete.

The latex solution was coagulated with 1% magnesium sulphate solution at a coagulation temperature of 75°C.

The resultant product was washed with water, centrifuged and dried.

The polymerisation procedure gave a partice size of about 0.3 microns with each particle being a 2-stage product with a core to shell weight ratio of 85:15.

The dried product was included in cast sheet products at various concentrations by the procedure described below.

10% by weight of the dried product was dispersed in methyl methacrylate monomer using a high speed Silverson mixer. Various quantities of this mixture were added to a syrup of partially polymerised methyl methacrylate to give the concentrations listed in the table below. The partially polymerised syrup had been prepared by heating methyl methacrylate monomer with 0.002% by weight of azo diisobutyronitrile at 80°C until the polymer content of the syrup reached 8% by weight.

The various mixtures of syrup, 0.01% azo diisobutyronitrile and 2-stage product were poured between glass plates and polymerised by heating at 80°C for 1 hour followed by 30 minutes at 118°C. The glass cells were set up so that the fully polymerised sheets had a thickness of 3 mm.

The sheets produced were tested for their impact strength, light transmission, Vicat softening point, flexural modulus and flexural strength. These results are given in the table as follows.

The impact strength measurements were determined using a falling dart method. The dart of weight 178 g was steel tipped, having a hemispherical surface of approximately 12.7 mm diameter. The samples were squares of approximately 60 mm length, cut from the polymerised sheet. The samples were not clamped but rested on a cylindrical support of internal diameter 50 mm and outside diameter of 57 mm. The heights recorded in the table are the range of heights obtained without breakage of the sheet for 12 samples.

| Concentration of 2-stage additive (% by wt) | Impact Strength* (drop height in cm) | Light Transmission (%) | Vicat* Softening point (°C) | Flexural Modulus** (GPa) | Flexural Strength** (MPa) |
|---|---|---|---|---|---|
| 0 | 25 (av. of 5) | 90.6 | 110.3 | 3.47 | 144.3 |
| 0.5 | 45 - 57 | 89.8 | 110.4 | 3.53 | 144.2 |
| 1.0 | 60 - 65 | 89.2 | 110.4 | 3.38 | 140.7 |
| 2.0 | 65 - 70 | 88.7 | 110.6 | 3.15 | 140.0 |
| 3.0 | 70 - 80 | 88.2 | 110.0 | 3.11 | 134.6 |
| 4.0 | 80 - 83 | 87.1 | 110.2 | 3.07 | 131.2 |
| 5.0 | 75 - 80 | 85.8 | 103.8 | 2.95 | 124.0 |
| 6.0 | 75 - 80 | | 103.8 | 2.87 | 120.9 |
| 8.0 | 80 | 84.6 | 91.3 | 2.59 | 102.5 |
| 10.0 | - | 79.2 | 69.8 | 1.86 | 63.8 |

* Measured according to the method of ISO 306
** Measured according to the method of ISO 178

The impact results show that the impact strength of control sheet can be improved by a factor of about 3 over the range up to 4.0% by weight of 2-stage additive. This improvement is maintained but with no significant further improvement above this concentration. At concentrations of up to 4.0% the other properties, except Vicat softening have shown some reduction, but have maintained surprisingly acceptable levels. As the concentration is increased above 4.0% all these properties are steadily reduced.

Comparative Example A

For comparative purposes the same concentrations of impact additive were added to an acrylic polymer suitable for preparing sheet by extrusion. The polymer used as the matrix of the polymer was a 97:3 methyl methacrylate:ethyl acrylate copolymer having a reduced viscosity (measured in a 1% solution in chloroform) of 0.5 dl/g.

The procedure used for preparing the sheets was to make a masterbatch of 42% by weight of the impact additive in the matrix polymer described above by compounding in a screw extruder. Sheets containing various concentrations of the impact additive were then prepared by dry blending the masterbatch granules with granules of the matrix polymer. This mixture was extruded into sheet using a screw extruder at an extrusion temperature of 250°C.

The table below gives the impact strengths obtained.

| Concentration of impact additive | Impact Strength (Drop height in cm) |
|---|---|
| 2.1 | 22 |
| 4.2 | 37 - 45 |
| 6.3 | 50 - 62 |
| 8.4 | 75 - 87 |
| 12.6 | 100 - 112 |

It can be seen that although impact strengths as high or higher than those obtained for the cast sheet are attainable these are only reached at concentrations well over 4.0%. 4.2% of additive added to the extruded sheet is less effective than 0.5% additive in the cast sheet. The high concentrations necessary in the extruded sheet to obtain equivalency in impact strength with the cast sheet will cause serious deterioration in the other critical properties.

## EXAMPLE 2

The procedure of Example 1 was repeated except in that the allyl methacrylate in Solutions (1) and (2) was replaced with 0.48 g and 9.7 g respectively of butylene glycol dimethacrylate. The particle size of the dispersion produced was about 0.3 microns. The acrylic rubber produced was evaluated in acrylic cast sheet by the procedure of Example 1. The properties achieved at various concentrations are given in the following table.

| Concentration of 2-stage additive (% by wt) | Impact Strength* (drop height in cm) | Light Transmission (%) | 1/10 Vicat* Softening point (°C) | Flexural Modulus** (GPa) | Flexural Strength** (MPa) |
|---|---|---|---|---|---|
| 0 | 23 - 28 | 90.0 | 109.3 | 3.14 | 117.4 |
| 0.5 | 46 - 56 | 87.0 | 112.0 | 3.20 | 127.8 |
| 1.0 | 46 - 51 | 90.0 | 112.9 | 3.17 | 111.6 |
| 2.0 | 38 - 41 | 89.6 | 112.2 | 3.12 | 114.6 |
| 3.0 | 38 - 46 | 90.9 | 111.6 | 3.30 | 105.6 |
| 4.0 | 33 - 36 | 91.0 | 111.0 | 3.01 | 105.6 |
| 5.0 | 38 - 46 | 89.0 | 111.6 | 2.87 | 102.3 |
| 6.0 | 41 - 51 | 88.3 | 111.8 | 2.62 | 99.3 |
| 7.0 | 41 - 46 | 88.4 | 110.8 | 2.66 | 96.8 |
| 8.0 | 41 - 51 | 88.5 | 108.2 | 2.46 | 94.0 |
| 9.0 | 41 - 46 | 88.2 | 106.8 | 2.47 | 85.7 |

* Measured according to the method of ISO 306
** Measured according to the method of ISO 178

It can be seen that the cross-linked rubber is less effective than the graft linked rubber of Example 1 but nevertheless a doubling of impact strength is achieved with as little as 0.5% of rubber additive. Although there is some spread in the experimental results it is clear that this doubling of impact strength can be achieved without significant loss in the overall property portfolio of the acrylic sheet.

## Claims

1. A cast acrylic sheet polymerised from monomers comprising at least 80% by weight of methyl methacrylate, and intimately blended therein at least 0.25% but less than 4% by weight of the cast sheet of a multi-stage, emulsion polymerised, acrylic additive comprising at least two stages wherein the final stage is a polymer of glass transition temperature (Tg) of at least 25°C formed from monomers containing at least 50% by weight of methyl methacrylate which final stage is formed by polymerising the final stage in an emulsion polymerisation process in the presence of a preformed polymer which contains at least one rubbery stage having a Tg less than 25°C prepared by polymerising at least 50% by weight of a $C_1$ to $C_8$ alkyl acrylate, and at least 0.05% by weight of cross-linking agents selected from (a) 0 to 5% by weight of a polyethylenically unsaturated cross-linking agent in which the polymerisable ethylenically unsaturated groups are of equal reactivity and (b) 0 to 5% by weight of a polyethylenically unsaturated cross-linking agent in which the polymerisable ethylenically unsaturated groups are not all of equal reactivity and wherein the reduced viscosity of the matrix polymer of the sheet, excluding the multi-stage additive, is at least 1.0 dl/g measured as a 1% solution in chloroform for an essentially un-cross-linked matrix polymer or has a back-bone molecular weight of at least 1.0 dl/g if polymerised in the presence of cross-linking agents.

2. An acrylic sheet according to claim 1 wherein the at least one rubbery stage of the emulsion polymerised polymer contains at least 80% by weight of a $C_1$ to $C_8$ alkyl acrylate.

3. An acrylic sheet according to either of claim 1 or claim 2 wherein the final stage of the emulsion polymerised product comprises at least 80% by weight of methyl methacrylate.

4. An acrylic sheet according to any one of claims 1 to 3 wherein the acrylic sheet is polymerised from monomers comprising at least 98% by weight of methyl methacrylate, other than the monomers used to prepare the preformed polymer.

5. A cast acrylic sheet according to any one of claims 1 to 4 in which each of the stages of the multi-stage polymer except the final stage contains at least 0.05% by weight of a polyethylenically unsaturated cross-linking agent in which the polymerisable unsaturated groups are of different reactivity.

6. A cast acrylic sheet according to any one of claims 1 to 5 in which the multi-stage polymer is dispersed as particles having an average particle size of 0.15 to 0.35 microns.

7. A cast acrylic sheet according to any preceding claim wherein the concentration of multi-stage polymer is in the range 0.5 to 3.9% by weight of the sheet.

8. A cast acrylic sheet according to any one of the preceding claims wherein the multi-stage polymer is a 3-stage polymer in which the first and last stages are polymers having a Tg greater than 25°C and the second stage has a Tg of less than 25°C.

9. A cast acrylic sheet according to any preceding claim wherein the multi-stage polymer is a 4-stage product in which the first and third stages are polymers of Tg less than 25°C and the second and final stage are polymers of Tg greater than 25°C.

10. A method of producing an acrylic sheet of enhanced impact strength comprising polymerising in a cast polymerisation process a monomer charge comprising at least 80% by weight of the monomer charge of methyl methacrylate to form a matrix polymer in the presence of an intimately dispersed multi-stage acrylic impact additive comprising at least two stages wherein the final stage is a polymer of glass transition temperature of at least 25°C formed from monomers containing at least 50% of methyl methacrylate which final stage has been formed by polymerising the final stage in an emulsion polymerisation process in the presence of a preformed polymer which contains at least one rubbery stage of Tg less than 25°C prepared by polymerising at least 50% by weight of a $C_1$ to $C_8$ alkyl acrylate, and at least 0.05% by weight of cross-linking agents selected from (a) 0 to 5% by weight of a polyethylenically unsaturated cross-linking agent in which the polymerisable ethylenically unsaturated groups are of equal reactivity and (b) 0 to 5% by weight of a polyethylenically unsaturated cross-linking agent in which the polymerisable ethylenically unsaturated groups are not all of equal reactivity, the matrix polymer being formed under conditions such that the reduced viscosity of the matrix polymer, excluding the multi-stage additive, is at least 1.0 dl/g measured as a 0.1% solution in chloroform for an essentially un-cross-linked matrix polymer or has a back-bone molecular weight of at least 1.0 dl/g if polymerised in the presence of cross-linking agents.